# EUROPÄISCHE PATENTANMELDUNG

(11) **EP 1 342 945 A2**
(43) Veröffentlichungstag der Anmeldung: **10.09.2003**
(21) Anmeldenummer: 03002549.8
(22) Anmeldetag: 06.02.2003
(51) Int. Cl.: F16M 7/00

(54) **Richtelement**

(30) Priorität: 06.03.2002 DE 20203622 U
(71) Anmelder: Air Loc Schrepfer AG, 8700 Küsnacht (CH)
(72) Erfinder: Schrepfer, Rudolf, 8700 Küsnach-ZH (CH); Graunke, Klaus, 8700 Küsnach-ZH (CH)
(74) Vertreter: Hoffmann, Eckart, Dipl.-Ing.

(57) **Zusammenfassung**

Beschrieben wird ein Richtelement zur Lagerung eines Maschinenfußes auf einem Boden, das es ermöglicht, den Maschinenfuß unter Last in beliebiger Richtung um eine bestimmte Strecke relativ zum Hallenboden zu verschieben. Das Richtelement umfaßt eine Grundplatte (1), einen auf der Grundplatte (1) dieser gegenüber drehbar angeordneten Stellring (3), erste Arretiermittel, mit denen der Stellring (3) wahlweise in einen gegenüber der Grundplatte (1) drehfesten oder drehbaren Zustand versetzbar ist, einen innerhalb des Stellrings (3) auf der Grundplatte (1) angeordneten Schiebeteller (4), der mit dem Stellring (3) drehfest gekoppelt, jedoch auf der Grundplatte (1) radial relativ zum Stellring (3) verschiebbar ist und zur Aufnahme des Maschinenfußes dient, Verschiebemittel zum Verschieben des Schiebetellers (4) relativ zum Stellring (3), und zweite Arretiermittel zum Arretieren des Schiebetellers (4).

## Beschreibung

Die Erfindung betrifft ein Richtelement zur Lagerung eines Maschinenfußes auf dem Hallenboden einer Fabrikhalle oder dergleichen.

Schwere Maschinen sind in der Regel mit Maschinenfüßen versehen, die häufig nicht direkt, sondern über Richtelemente oder Nivellierelemente auf einem Hallenboden gelagert werden. Die Richtelemente oder Nivellierelemente können dabei einerseits einer schwingungsdämpfenden Lagerung der Maschine auf dem Hallenboden und andererseits der Ausrichtung und/oder Höhenjustierung der Maschine dienen. Die Erfindung betrifft Richtelemente, die eine horizontale Feinjustierung der Position einer Maschine ermöglichen.

Bisher werden Maschinen, wie Druckwerke, CNC-Maschinen und dergleichen, mit dem Hallenkran oder einem Hubstapler zum Aufstellplatz gebracht und grob positioniert. Die Feinpositionierung erfolgt dann mit Holzklotz und Vorschlaghammer. Diese Art der Feinpositionierung ist zeitaufwendig, ungenau und der Maschine kaum zuträglich. Insbesondere Präzisionsmaschinen können Schaden nehmen oder in ihrer Lebenszeit beeinträchtigt werden.

Aufgabe der vorliegenden Erfindung ist es, ein Richtelement zu schaffen, das es erlaubt, einen durch dieses Richtelement gelagerten Maschinenfuß unter Last in beliebiger Richtung um eine bestimmte Strecke relativ zum Hallenboden zu verschieben.

Diese Aufgabe wird mit einem Richtelement gemäß Schutzanspruch 1 gelöst. Vorteilhafte Weiterbildungen der Erfindung sind Gegenstand der Unteransprüche.

Die Erfindung und die mit ihr erzielten Vorteile werden nachfolgend anhand eines Ausführungsbeispiels unter Bezugnahme auf die beiliegenden Zeichnungen näher erläutert. Es zeigen:
- Fig. 1: eine perspektivische Ansicht eines ersten Ausführungsbeispiels eines Richtelements gemäß der Erfindung,
- Fig. 2: eine Seitenansicht des Richtelements gesehen in Richtung des Pfeiles II in Fig. 1,
- Fig. 3: eine Seitenansicht des Richtelements, teilweise im Schnitt, gesehen in Richtung des Pfeils III in Fig. 1,

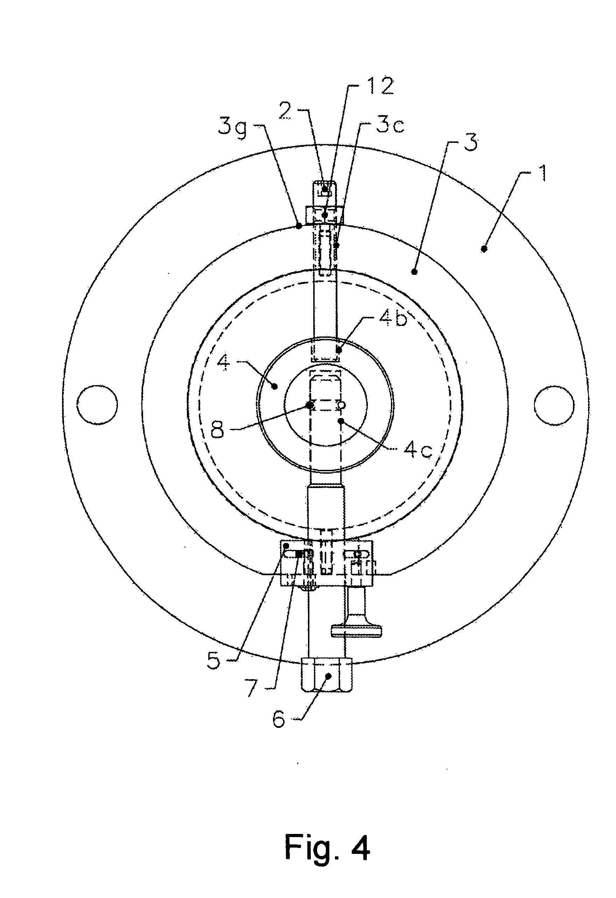

- Fig. 4: eine Draufsicht auf das Richtelement von Fig. 1 von oben,
- Fig. 5: eine Ansicht des Stellrings 3 gesehen in Richtung entgegengesetzt zum Pfeil II in Fig. 1,
- Fig. 6: eine perspektivische Ansicht der Stellschraube 6,
- Fig. 7: eine perspektivische Ansicht des rechtwinkligen Riegel 5 in Fig. 1,
- Fig. 8(a) - (d): schematische Darstellungen zur Erläuterung einer Einsatzmöglichkeit des Richtelements.
- Fig. 9: eine perspektivische Ansicht eines zweiten Ausführungsbeispiels eines Richtelements gemäß der Erfindung,
- Fig. 10: eine Seitenansicht des Richtelements, teilweise im Schnitt, gesehen in Richtung des Pfeils X in Fig. 9,
- Fig. 11: eine Draufsicht auf das Richtelement von Fig. 9 von oben,
- Fig. 12: eine vergrößerte Teilschnittansicht längs der Linie A-A in Fig. 11,
- Fig. 13: eine vergrößerte Teilschnittansicht der Fixierung der Stellschraube im Schiebeteller gemäß einer Variante des zweiten Ausführungsbeispiels,
- Fig. 14: eine Ansicht der Variante von Fig. 13, gesehen in Richtung des Pfeiles X in Fig. 13,
- Fig. 15: eine Darstellung ähnlich Fig. 13, jedoch mit vertikal verschwenkter Stellschraube,
- Fig. 16: eine Draufsicht auf das Richtelement gemäß einem vierten Ausführungsbeispiel der Erfindung,
- Fig. 17: eine Ansicht des Richtelements des vierten Ausführungsbeispiels von hinten, wobei der Arretierriegel in seiner Arretierstellung gezeigt ist, und
- Fig. 18: eine Ansicht des Richtelements des vierten Ausführungsbeispiels von hinten, wobei der Arretierriegel in seiner Freigabestellung gezeigt ist.

### Erstes Ausführungsbeispiel

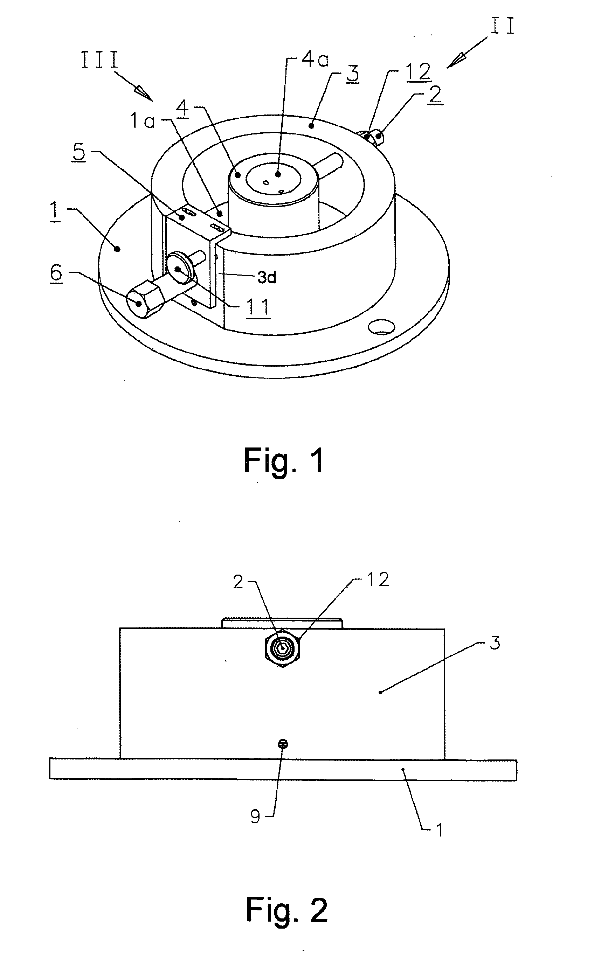

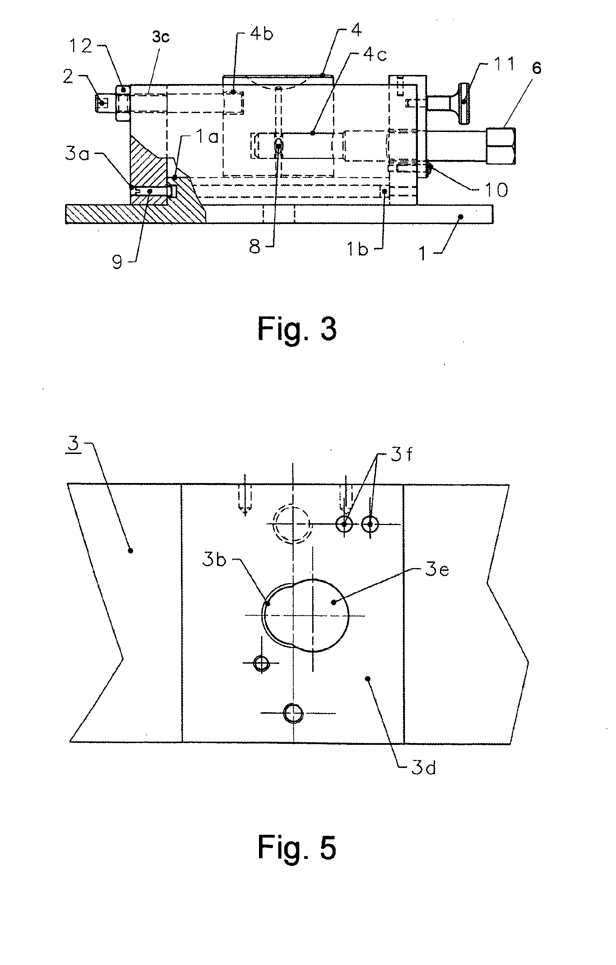

Gemäß Darstellung in Fig. 1 umfaßt das erfindungsgemäße Richtelement eine Grundplatte 1, die mit Bohrungen zur Verankerung an einem Hallenboden versehen sein kann. In der Regel wird unter der Grundplatte 1 eine rutschfeste und/oder schwingungsdämpfende Unterlage vorgesehen und/oder die Grundplatte 1 am Hallenboden verankert. Auf der Grundplatte 1 befindet sich ein hier als Stellring bezeichneter Ring 3, innerhalb dessen ein Schiebeteller 4 auf der Grundplatte liegt. Wie am besten aus dem geschnittenen Teil in Fig. 3 erkennbar, ist die Grundplatte 1 mit einem senkrecht abstehenden Ringansatz 1a versehen, dessen Außendurchmesser etwa dem Innendurchmesser des Stellrings 3 entspricht. Der Stellring 3 ist, den Ringansatz 1a umgreifend, auf die Grundplatte 1 aufgesetzt, so daß er in Radialrichtung gegenüber der Grundplatte 1 unverschieblich gehalten wird, jedoch gegenüber der Grundplatte 1 drehbar ist. Wie ebenfalls aus Fig. 3 erkennbar, ist in der Umfangsfläche des Ringansatzes 1a eine umlaufende Ringnut 1b ausgebildet. Auf gleicher Höhe wie die Ringnut 1b erstrecken sich eine oder mehrere Gewindebohrungen 3a in Radialrichtung durch den Stellring 3. In jeder Gewindebohrung 3a befindet sich ein Gewindestift 9, der in die Ringnut 1b eingreift. Solange die Gewindestifte 9 nicht gegen den Grund der Ringnut 1b verspannt sind, verhindern sie lediglich ein Abziehen des Stellrings 3 von der Grundplatte 1 in Axialrichtung, lassen aber eine Drehung des Stellrings gegenüber der Grundplatte 1 zu. In jeder beliebigen Drehstellung kann der Stellring dann durch Festziehen des bzw. der Gewindestifte 9 verspannt und damit drehfest arretiert werden. In Fig. 3 sind zwei Gewindebohrungen für Gewindestifte 9 dargestellt.

Der Schiebeteller 4 liegt innerhalb des Stellrings 3 auf dem Ringansatz 1a auf. Mit Hilfe einer Stellschraube 6 kann der Schiebeteller 4 in Axialrichtung der Stellschraube 6 gegenüber dem Stellring 3 verschoben werden. Durch die Stellschraube 6 und eine den Stellring 3 durchsetzende, in den Schiebeteller 4 reichende Arretierschraube 2 ist der Schiebeteller 4 gegenüber dem Stellring 3 drehfest verankert. Eine Drehung des Stellrings 3 gegenüber der Grundplatte 1 bewirkt dadurch zugleich eine Drehung des Schiebetellers 4 um die Mittelachse des Stellrings 3.

An der Oberseite des Schiebetellers 4 ist eine kalottenförmige Mulde 4a zur Aufnahme eines nicht dargestellten Maschinenfußes ausgebildet. Wenn der Maschinenfuß in die Mulde 4a hineingestellt ist und die Grundplatte 1 am Hallenboden verankert bzw. infolge Maschinenlast und Antirutschbelag rutschfest auf dem Hallenboden positioniert ist, können Stellring 3 und Schiebeteller 4 gegenüber der Grundplatte verdreht werden, um die Richtung einzustellen, in welcher der Maschinenfuß gegenüber der Grundplatte 1 verschoben werden soll. Wenn die Richtung eingestellt ist, kann der Schiebeteller 4 mittels der Stellschraube 6 in die gewünschte Stellung auf einer durch die Achse der Stellschraube 6 vorgegebenen Linie zwischen zwei einander diametral gegenüberliegenden Stellen der inneren Umfangsfläche des Stellrings 3 per Zug oder Druck verschoben werden. In der erreichten Position kann der Schiebeteller 4 dann mittels der Arretierschraube 2 arretiert werden.

Die Arretierschraube 2, die bei dem dargestellten Ausführungsbeispiel der Stellschraube 6 diametral gegenüberliegt, durchsetzt ein Gewindeloch 3c im Stellring 3, das mit einem radialen Sackloch 4b in der Umfangswand des Schiebetellers 4 ausgerichtet ist. Zur Arretierung des Schiebetellers 4 wird die Arretierschraube 2 so weit eingeschraubt, bis sie ganz in das Sackloch 4b eingreift und den Schiebeteller 4 zusammen mit der Stellschraube 6 verschiebesicher verklemmt. Eine Kontermutter 12 am radial außen liegenden Ende der Arretierschraube 2 kann verwendet werden, um ein unbeabsichtigtes Lösen der Arretierschraube 2 zu verhindern.

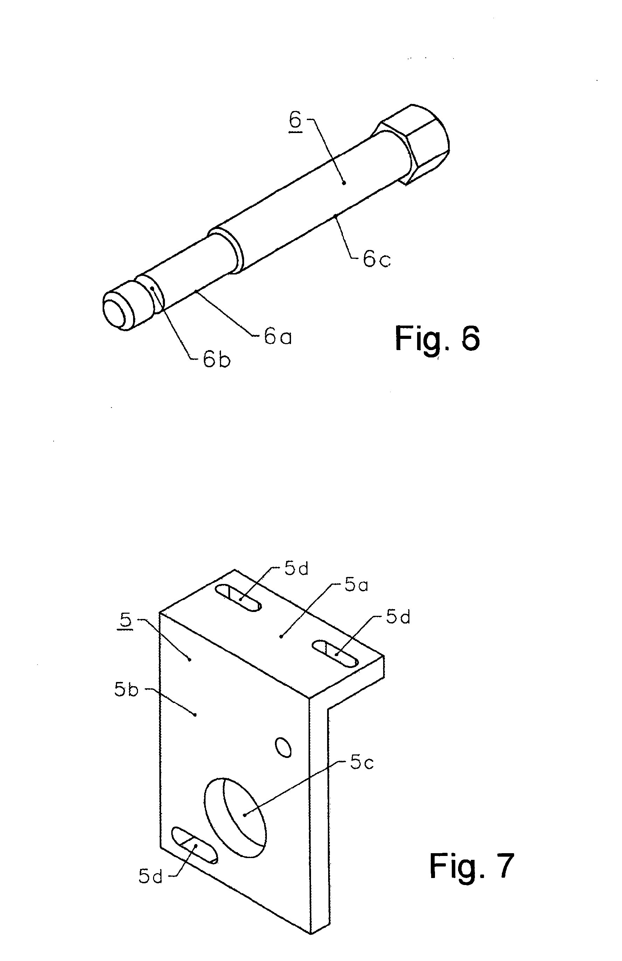

Auf der dem Sackloch 4b diametral entgegengesetzten Seite weist der Schiebeteller 4 eine radiale Bohrung 4c auf, in die das radial innen liegende Ende 6a (Fig. 6) der Stellschraube 6 eingreift. Eine Ringnut 6b an diesem Ende der Stellschraube 6 in Verbindung mit zwei in axiale Bohrungen des Schiebetellers 4 eingesteckten Zylinderstiften 8 bewirkt eine Verankerung des Schiebetellers 4 an der Stellschraube 6 in Radialrichtung der letzteren. Eine Verstellung der Stellschraube 6 in Radialrichtung des Stellrings 3 führt somit zwangsweise zu einer Verschiebung des durch die Arretierschraube 2 noch nicht gesicherten Schiebetellers 4.

Zum Verschieben des Schiebetellers 4 muß also die Stellschraube 6 in ihrer Axialrichtung relativ zum Stellring 3 verstellt werden. Aus später noch näher erläuterten Gründen ist es andererseits vorteilhaft, wenn der Schiebeteller 4 im Bedarfsfall innerhalb des Stellrings 3 frei beweglich ist. Damit beides möglich ist, durchsetzt beim vorliegenden Ausführungsbeispiel die Stellschraube 6 ein horizontal angeordnetes Langloch 3e (Fig. 5) des Stellrings 3, an dessen einem (in Fig. 5 linken) Teil ein Halbgewinde 3b ausgebildet ist und dessen anderer (in Fig. 5 rechter) Teil in der Höhe größer als der Außendurchmesser des Gewindes 6c der Stellschraube 6 ist. Wenn sich die Stellschraube 6 im linken Teil des Langlochs 3e befindet und ihr Gewinde in das Halbgewinde 3b eingreift, führt ein Verdrehen der Stellschraube 6 zur gewünschten Verstellung. Wenn sich die Stellschraube dagegen im rechten Teil des Langlochs 3e befindet, ist sie gegenüber dem Stellring 3 in Axialrichtung beliebig verschiebbar. Ein Riegel 5, der zwischen einer ersten und einer zweiten Stellung in Umfangsrichtung des Stellrings 3 verschiebbar ist, erlaubt es, die Stellschraube wahlweise in den einen oder den anderen Teil des Langlochs 3e zu bringen.

Beim dargestellten Ausführungsbeispiel ist die äußere Umfangsfläche des Stellrings 3 im Bereich des Langloches 3e mit einer Abflachung 3d versehen. Der in Fig. 7 einzeln dargestellte, im wesentlichen L-förmige Riegel 5 liegt mit einem in der Darstellung horizontalen Schenkel 5a auf der oberen Stirnfläche des Stellrings 3 auf und liegt mit einem in der Darstellung vertikalen Schenkel 5b an der Abflachung 3d an. Durch eine im Schenkel 5b vorhandene Bohrung 5c wird die Stellschraube 6 geführt. Im Schenkel 5a sind zwei sich parallel zur Abflachung 3d erstreckende Langlöcher 5d ausgebildet. Ein entsprechendes Langloch 5d ist auch im Schenkel 5b vorgesehen. In die Langlöcher 5d des Schenkels 5a greifen Zylinderstifte 7 ein, die im Stellring 3 verankert sind. Eine das Langloch 5d im Schenkel 5b durchsetzende, in den Stellring 3 eingeschraubte Linsenkopfschraube 10 verhindert das Abkippen des Riegels 5 von der Abflachung 3d. Durch den Eingriff zwischen den Zylinderstiften 7 sowie der Linsenkopfschraube 10 und den Langlöchern 5d wird der Riegel 5 am Stellring 3 gehalten und geführt, und zugleich der Bewegungsbereich des Riegels 5 begrenzt.

Bei einer Verschiebung des Riegels 5 aus der in Fig. 1 gezeigten linken aktiven Position (im Eingriff mit dem Halbgewinde 3b) nach rechts wandert die Stellschraube 6 im Langloch 3e des Stellrings 3 horizontal in den rechten Bereich des Langloches 3e, wobei gleichzeitig der Schiebeteller 4 eine geringe Drehung erfährt. Infolge eines Spieles der Arretierschraube 2 im Sackloch 4b wird diese Drehung nicht behindert. Durch diese Auslenkung der Stellschraube 6 wird sie aus dem Eingriff mit dem Halbgewinde 3b im linken Teil des Langlochs 3e gelöst und gelangt in dessen größeren rechten Teil, wo sie im Langloch 3e axial frei verschiebbar ist. Bei gelöster Arretierschraube 2 kann dann der Schiebeteller 4 frei verschoben werden.

Ein federbelastetes Rastelement 11 ist vorgesehen, um ein unbeabsichtigtes Verschieben des Riegels 5 zu verhindern. Das Rastelement 11 besteht aus einem am Riegel 5 gehaltenen und mittels Feder elastisch vorgespannten Stift, der in den beiden Stellungen des Riegels 5 in eine entsprechende Bohrung 3f der Abflachung 3d des Stellrings 3 einrastet.

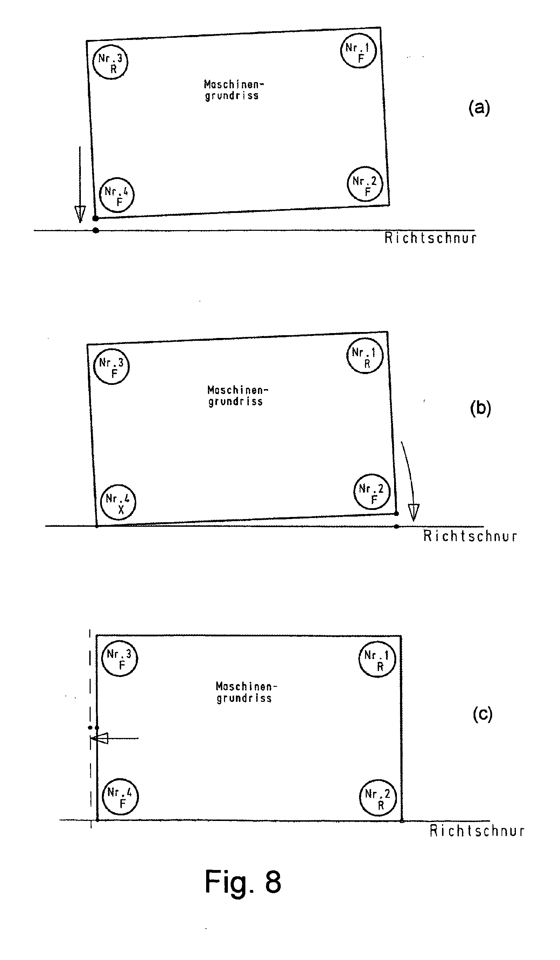

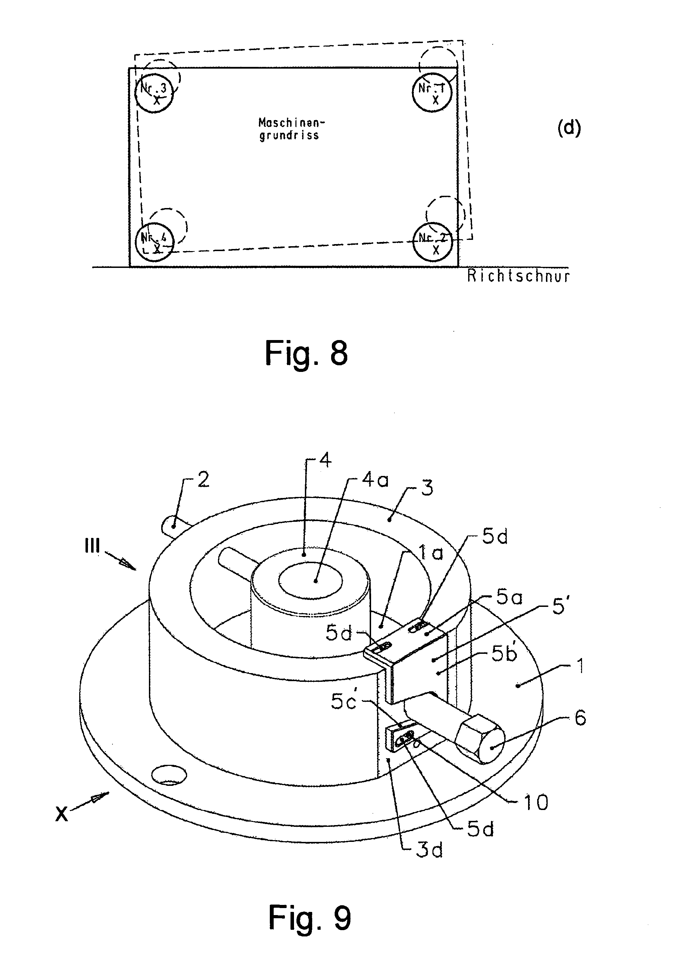

Die Funktionsweise des erfindungsgemäßen Richtelements soll nachfolgend anhand eines Einsatzbeispiels unter Bezugnahme auf die Fig. 8(a) bis 8(d) erläutert werden. Dabei wird angenommen, daß eine Maschine mit vier an den Ecken eines Rechtecks angeordneten Maschinenfüßen auf vier Richtelementen der beschriebenen Art gelagert ist. Die Grobausrichtung der Maschine erfolgt mittels eines Krans oder Hubstaplers an der gewünschten Position entlang einer Richtschnur. Beim Abstellen der Maschine wird unter jedem der vier Maschinenfüße ein entsprechendes Richtelement angeordnet. Unter der Annahme, daß der Schiebeteller 4 der Richtelemente aus der zentralen Stellung um ±30 mm verstellbar ist, muß bei der Grobausrichtung darauf geachtet werden, daß die Maschine mit einer Genauigkeit innerhalb dieses Stellbereichs abgesetzt wird. Anschließend erfolgt dann die Feinjustierung der Maschine mit Hilfe der Richtelemente in nachstehend beschriebener Weise.

Es sei angenommen, die Grobausrichtung habe zu einer Lage der Maschine relativ zur Richtschnur geführt, wie sie in Fig. 8(a) dargestellt ist. Der Maschinengrundriß ist als Rechteck dargestellt, und an den vier Ecken sind die Richtelemente jeweils durch einen Kreis angedeutet. Die Richtelemente sind zur Vereinfachung der Bezugnahme mit Nr. 1 bis Nr. 4 bezeichnet. Die Feinjustierung erfolgt in mehreren Phasen.

### Phase 1, Fig. 8(a):

Um die erste Ecke der Maschine (die Ecke mit dem Richtelement Nr. 4) an der Richtschnur zu plazieren, müssen zunächst die Richtelemente Nr. 1, 2 und 4 so eingestellt werden, daß der Stellring 3 auf der jeweiligen Grundplatte 1 verdrehbar ist und der Schiebeteller 4 gegenüber dem Stellring 3 frei verschiebbar. Dieser "Freilauf'-Zustand ist in den Figuren mit "F" angedeutet. Die Stellringe 3 der Richtelemente Nr. 1, 2 und 4 werden dann in die in Fig. 8(a) durch einen Pfeil dargestellte Richtung gedreht, d.h. in die Richtung, in der die Maschine verschoben werden muß. Als Richtungszeiger am Richtelement kann dabei die Stellschraube 6 dienen, d.h. ihre Achse muß parallel zu der gewünschten Richtung liegen.

In der Phase 1 wird die Maschine mittels des Richtelements Nr. 3 verschoben. Das Richtelement Nr. 3 wird deshalb in einen in den Figuren mit "R" angedeuteten "Richt"-Zustand gebracht. Hierzu wird der Stellring 3 des Richtelements Nr. 3 in dieselbe Richtung gedreht wie die der anderen Richtelemente und sein Riegel 5 wird in die aktive Stellung geschoben, in der die Stellschraube 6 mit dem Halbgewinde des Stellrings 3 im Eingriff ist. Die Stellschraube 6 wird dann verdreht, bis die erste Ecke an der Richtschnur liegt. Damit ist Phase 1 abgeschlossen. Vorzugsweise ist die Stellschraube 6 mit Feingewinde versehen, so daß eine sehr präzise Lagejustierung möglich ist.

### Phase 2, Fig. 8(b):

Das Richtelement Nr. 4 wird nun "fixiert" (mit "X" in der Figur angedeutet), wozu sein Schiebeteller 4 mit Hilfe der Arretierschraube 2 und der Kontermutter 12 arretiert wird und außerdem sein Stellring 3 mittels der Gewindestifte 9 gegen Verdrehen gesichert wird. Damit ist der Schiebeteller 4 dieses Richtelements weder verdrehbar noch verschiebbar. Der Freilauf-Zustand des Richtelements Nr. 2 bleibt gegenüber Fig. 8(a) unverändert, während die Verdrehsicherung des Stellrings 3 beim Richtelement Nr. 3 aufgehoben wird, so daß die Richtelemente der Nummern 2 und 3 beide im Freilauf-Zustand sind.

Das Richtelement mit der Nr. 1 wird in den Richt-Zustand gebracht und sein Schiebeteller 4 dann in Richtung auf die Richtschnur hin verschoben, um die Maschine in die zur Richtschnur parallele Lage zu drehen. Die Drehung erfolgt dabei um die Mittelachse der kalottenförmigen Mulde 4a des Richtelements Nr. 4, in der sich der entsprechende Maschinenfuß dreht. Durch diesen Vorgang kommt die Maschine in die in Fig. 8(c) dargestellte Position, womit Phase 2 abgeschlossen ist.

### Phase 3, Fig. 8(c):

Wie in Fig. 8(c) angedeutet, muß die Maschine nun noch in Richtung des Pfeils nach links verschoben werden, um in die endgültige Sollposition zu gelangen. Zu diesem Zweck werden die Richtelemente Nr. 3 und 4 in den Freilauf-Zustand eingestellt und die Richtelemente 1 und 2 beide in den Richt-Zustand. Durch Drehen der Stellschrauben 6 beider Richtelemente Nr. 1 und 2 wird die Maschine dann in die endgültige Sollposition parallel zur Richtschnur verschoben.

Nachdem diese endgültige Position erreicht und damit die Phase 3 abgeschlossen ist, werden alle Richtelemente in der beschriebenen Weise fixiert, d.h. dreh- und verschiebegesichert.

Fig. 8(d) zeigt in ausgezogenen Linien die erreichte endgültige Position der Maschine und gestrichelt die Ausgangsposition.

Die Anzahl der Richtelemente ist gleich der Anzahl der Maschinenfüße und beträgt drei oder mehr.

Infolge der schlagfreien Feinpositionierung mit Hilfe des erfindungsgemäßen Richtelements wird die Lebenszeit der positionierten Maschine verlängert. Außerdem wird gegenüber dem Stand der Technik die zur Feinpositionierung benötigte Zeit bei erheblicher Erhöhung der Genauigkeit merklich verringert.

### Zweites Ausführungsbeispiel

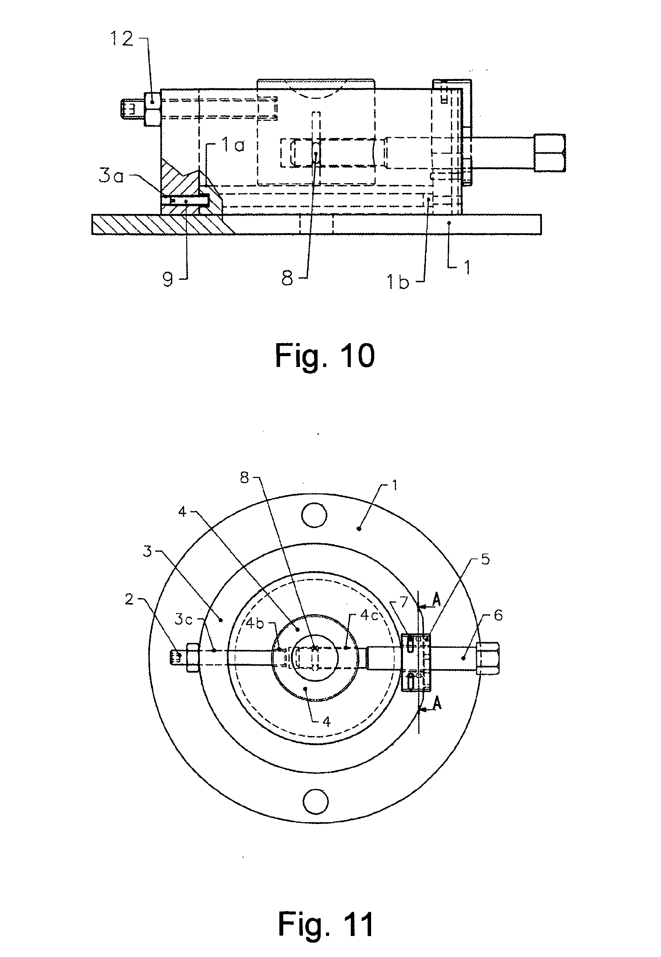

Anhand der Figuren 9 bis 12 wird nachfolgend ein zweites Ausführungsbeispiel der Erfindung beschrieben, wobei sich die Beschreibung auf die Unterschiede gegenüber dem ersten Ausführungsbeispiel konzentrieren wird. Diese Unterschiede betreffen den Riegel 5 sowie die Ausbildung der Öffnung im Stellring 3, durch die sich die Stellschraube 6 erstreckt. Die Seitenansicht dieses Ausführungsbeispiels, gesehen in Richtung des Pfeiles III in Fig. 9 entspricht der Darstellung in Fig. 3.

Die Stellschraube 6 ist bei diesem zweiten Ausführungsbeispiel in einen sich zur freien Stirnfläche des Stellrings öffnenden, in Axialrichtung verlaufenden Ausschnitt 3e' eingesetzt, an dessen Grund ein Halbgewinde 3b ausgebildet ist. Wenn die Stellschraube 6 mit ihrem Gewinde in das Halbgewinde 3b eingreift, führt ein Verdrehen der Stellschraube 6 zur gewünschten Verstellung. Auch bei diesem zweiten Ausführungsbeispiel ist ein zwischen einer ersten und einer zweiten Stellung in Umfangsrichtung des Stellrings 3 verschiebbarer Riegel 5' vorgesehen, damit der Eingriff zwischen der Stellschraube 6 und dem Halbgewinde 3b lösbar ist und der Schiebeteller 4 im Bedarfsfall innerhalb des Stellrings 3 frei beweglich ist

Die generelle Gestalt des Riegels 5' mit seiner L-Form entspricht der des Riegels 5 des ersten Ausführungsbeispiels. Auch hier ist die äußere Umfangsfläche des Stellrings 3 im Bereich des Ausschnitts 3e mit einer Abflachung 3d versehen, und der Riegel 5' liegt mit seinem in der Darstellung horizontalen Schenkel 5a auf der oberen Stirnfläche des Stellrings 3 auf und mit seinem in der Darstellung vertikalen Schenkel 5b' an der Abflachung 3d. Von einem Seitenrand des Schenkels 5b erstreckt sich ein schräg verlaufender Ausschnitt 5c' in den Schenkel 5b' hinein. Die Breite des Ausschnitts 5c' entspricht etwa dem Außendurchmesser der Stellschraube 6. Langlöcher 5d sind zu gleichem Zweck und in gleicher Weise wie beim Riegel 5 des ersten Ausführungsbeispiels ausgebildet.

Bei einer Verschiebung des Riegels 5' aus der in Fig. 9 gezeigten Position nach rechts wandert die Stellschraube infolge der Neigung des Ausschnitts 5c' im Ausschnitt 3e' des Stellrings 3 etwas nach oben. Durch diese Auslenkung der Stellschraube 6 wird sie aus dem Eingriff mit dem im unteren Teil des Ausschnitts 3e' befindlichen Halbgewinde 3b gelöst, so daß die Stellschraube 6 innerhalb des Ausschnitts 3e' frei verschiebbar ist. Bei gelöster Arretierschraube 2 kann dann der Schiebeteller 4 frei verschoben werden. Die Bohrung 4c im Schiebeteller 4 ist so groß dimensioniert, daß die Stellschraube 6 mit dem zylindrischen Ende 6a (Fig. 6) genug radiale Bewegungsfreiheit hat, um die erwähnte Auslenkung der Stellschraube 6 zuzulassen. Auch die Zylinderstifte 8 haben in der Ringnut 6b der Stellschraube 6 entsprechendes Spiel. Erst bei einer Stoss- oder Ziehbewegung der Stellschraube 6 verhindern die Zylinderstifte 8 ein Herausgleiten der Stellschraube 6 aus dem Schiebeteller 4.

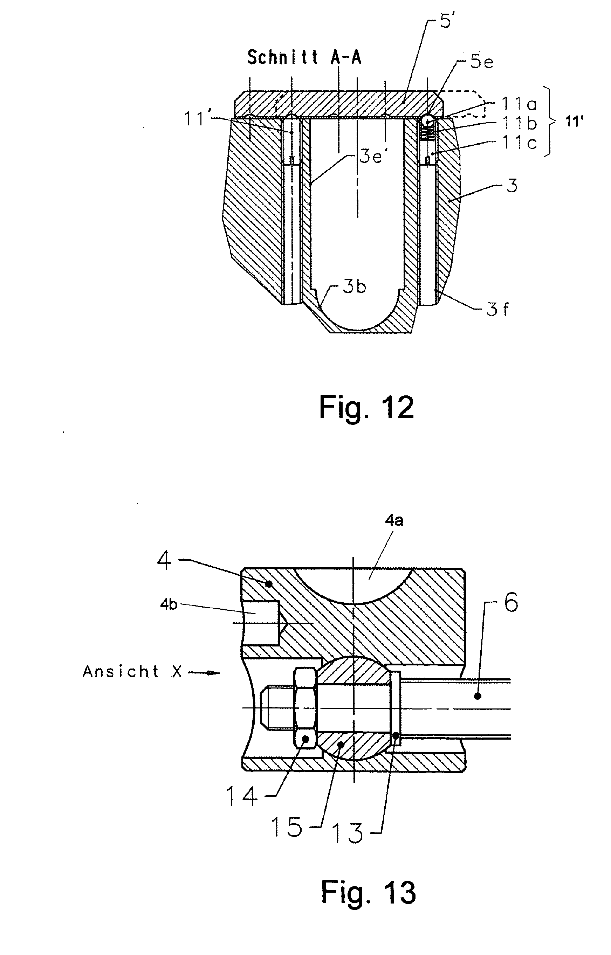

Rastelemente 11' sind vorgesehen, um ein unbeabsichtigtes Verschieben des Riegels 5' zu verhindern. Wie am besten aus Fig. 12 erkennbar umfassen die Rastelemente 11' beispielsweise je eine elastisch vorgespannte, aus der Oberfläche des Stellrings herausragende Kugel 11a, die in den beiden Stellungen des Riegels 5' in eine entsprechende Vertiefung 5e der zugewandten Innenfläche des Riegels 5' einrastet. Die Kugel 11a ist zusammen mit einer Vorspannfeder 11b in einem Sackloch einer Madenschraube 11c angeordnet. Die Madenschraube ist von der Innenseite des Stellrings her in eine Gewindebohrung 3f in der Stellringwand eingeschraubt.

### Drittes Ausführungsbeispiel

Das dritte Ausführungsbeispiel stellt eine Abwandlung des zweiten Ausführungsbeispiels dar und unterscheidet sich von diesem nur hinsichtlich der Fixierung der Stellschraube 6 im Schiebeteller 4. Die Figuren 13 bis 15 veranschaulichen diese Variante.

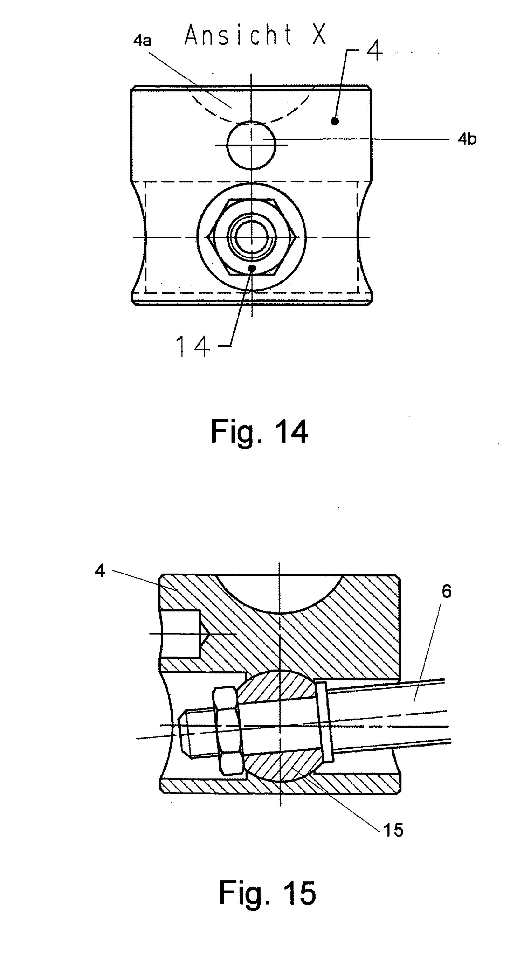

Quer zur Achsrichtung der Stellschraube 6 ist ein Gelenkbolzen 15 im Schiebeteller 4 angeordnet. Die Stellschraube 6 ist in einer Querbohrung im Gelenkbolzen 15 positioniert und wird mittels Unterlegscheibe 13 und Mutter 14 im Gelenkbolzen 15 fixiert. Die Durchmesser der Bohrungen im Schiebeteller 4, die den vor bzw. den hinter dem Gelenkbolzen liegenden Abschnitt der Stellschraube 6 aufnehmen, sind so bemessen, daß eine vertikale Verschwenkung der Stellschraube 6 in dem durch den Verstellweg des Riegels 5' und durch die Neigung von dessen Ausschnitt 5c' bestimmten Winkelbereich nicht behindert wird (Fig. 15).

Mit dieser Variante wird eine nahezu spielfreie Fixierung der Stellschraube 6 im Schiebeteller 4 erreicht bei gleichzeitig unbehinderter vertikaler Verstellbarkeit der Stellschraube 6 zwischen einer ersten Stellung im Eingriff mit dem Halbgewinde 3b im Stellring 3 einerseits und einer zweiten von dem Halbgewinde entkoppelten Stellung für die freie axiale Verschiebung der Stellschraube 6 andererseits. Diese Lösungsvariante erlaubt die Verschiebung des Schiebetellers 4 mittels der Stellschraube 6 nahezu ohne Spiel.

Eine ähnliche Variante kann auch bei dem ersten Ausführungsbeispiel eingesetzt werden und würde die Verstellung der Stellschraube 6 zwischen ihrer in das Halbgewinde 3b eingreifenden Stellung und der von dem Halbgewinde entkoppelten Stellung ohne damit verbundene Drehung des Schiebetellers 4 erlauben. In den Figuren 13 bis 15 erstreckt sich der Gelenkbolzen 15, an dem die Stellschraube 6 angreift, in Horizontalrichtung, um eine Schwenkbewegung der Stellschraube 6 in Vertikalrichtung, d.h. um eine horizontale Achse zu ermöglichen. Bei Übertragung dieser Variante auf das erste Ausführungsbeispiel müßte der Gelenkbolzen vertikal angeordnet sein, um eine Verstellung der Stellschraube um eine vertikale Achse zu ermöglichen.

### Viertes Ausführungsbeispiel

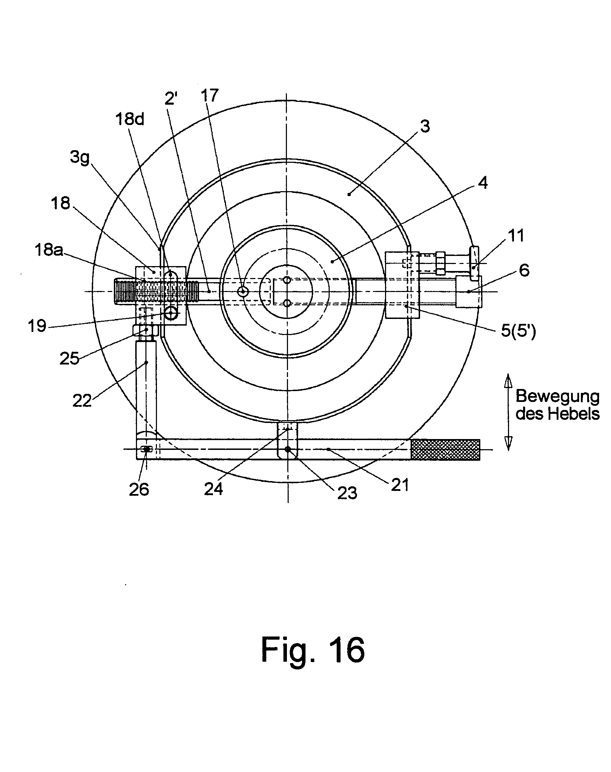

Die Figuren 16-18 zeigen ein viertes Ausführungsbeispiel der Erfindung, das eine Abwandlung der vorangegangenen Ausführungsbeispiele darstellt und insbesondere für Fälle geeignet ist, wo die Arretierschraube 2 mit Kontermutter 12 nicht oder nur schwer zugänglich sind.

Wie am besten aus der Draufsicht in Fig. 16 erkennbar, sieht das vierte Ausführungsbeispiel eine "Fernbedienung" für einen hier mit 2' bezeichneten Arretierbolzen vor, der der Arretierschraube 2 der vorangegangenen Ausführungsbeispiele entspricht. Diese "Fernbedienung" erlaubt es, die Arretierung des Schiebetellers 4 gegenüber dem Stellring 3 von der Vorderseite des Richtelements aus zu bewirken. Als Vorderseite wird dabei die Seite des Richtelements angesehen, an der sich das freie Ende (Betätigungsende) der Stellschraube 6 befindet. Bei dem Arretierbolzen 2' kann es sich um einen Gewindebolzen oder eine Zahnstange handeln, wie sich aus der weiteren Erläuterung ergibt.

Das in den Schiebeteller 4 reichende Ende des Arretierbolzens 2' ist mittels eines Zylinderstifts 17 oder auf beliebige andere Weise in Axialrichtung des Arretierbolzens 2' unverschiebbar gegenüber dem Schiebeteller 4 an diesem verankert. Eine Verstellung der Stellschraube 6 bewirkt somit zugleich eine Verschiebung des Arretierbolzens 2' im Stellring 3.

Zur Arretierung des Arretierbolzens 2' am Stellring (und somit zur Arretierung des Schiebetellers 4) dient ein Arretierriegel 18, dessen generelle Gestalt mit seiner L-Form der der Riegels 5, 5' des ersten bzw. zweiten Ausführungsbeispiels entspricht. Die äußere Umfangsfläche des Stellrings 3 ist im Bereich des hier ohne Gewinde ausgebildeten Lochs 3c' mit einer Abflachung 3g versehen, und der Arretierriegel 18 liegt mit seinem in den Darstellungen horizontalen Schenkel 18a auf der oberen Stirnfläche des Stellrings 3 auf und mit seinem in den Darstellungen vertikalen Schenkel 18b an der Abflachung 3g an.

Der Arretierriegel 18 besitzt in seinen beiden Schenkeln je ein Langloch 18d als Führungsöffnung. Diese dienen zur Führung und Verankerung des Arretierriegels 18 am Stellring 3. Der Arretierriegel 18 wird mit dem Langloch 18d im Schenkel 18a an einem im Stellring verankerten Zylinderstift 19 eingehängt und mit einer das Langloch 18d im anderen Schenkel 18b durchsetzenden Bundschraube 20 am Stellring 3 festgeschraubt. Somit kann durch eine in Achsrichtung des Arretierbolzens 2' horizontal erzeugte Kraft der Arretierriegel 18 nicht weggedrückt werden. Dennoch ist eine seitliche Schiebebewegung im Rahmen der Langlöcher 18d jederzeit gewährleistet. Es bedarf keiner besonderen Erwähnung, daß die hier erwähnte spezielle Art der Befestigung des Arretierriegels 18 an dem Stellring 3 lediglich ein Beispiel darstellt. Andere Befestigungsarten sind genauso möglich, solange sie gewährleisten, daß der Arretierriegel 18 in Axialrichtung des Arretierbolzens 2' an dem Stellring gehalten wird, in einer dazu senkrechten (horizontalen) Richtung jedoch zwischen einer Arretierstellung und einer Freigabestellung verschiebbar ist.

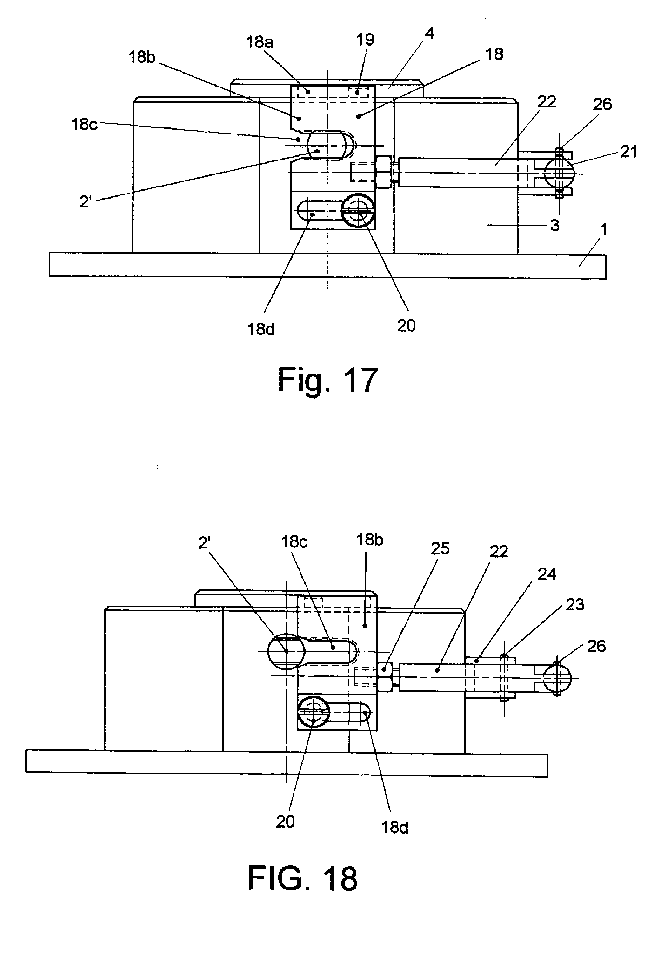

Auf der Höhe des Arretierbolzens 2' ist der Schenkel 18b des Arretierriegels 18 mit einem Ausschnitt 18c versehen, dessen Begrenzungsfläche als Verzahnung ausgebildet ist, die in der Arretierstellung des Arretierriegels 18 in eine Verzahnung oder ein Gewinde des Arretierbolzens 2' eingreift. In der Freigabestellung des Arretierriegels 18 befindet sich das Gewinde bzw. die Verzahnung des Arretierbolzens in einem ggf. vorgesehenen erweiterten Bereich des Ausschnitts 18c (linkes Ende der Ausnehmung in den Figuren 17 und 18) oder ist aus dieser ganz oder teilweise soweit herausgetreten, daß der Eingriff zwischen der Verzahnung des Ausschnitts 18c und der des Arretierbolzens 2' gelöst ist und der Arretierbolzen axial gegenüber Stellring und Arretierriegel (mittels der Stellschraube 6) verschiebbar ist.

Zur Verstellung des Arretierriegels 18 zwischen seinen beiden Stellungen ist ein Arretierhebel 21 vorgesehen. Er ist außerhalb des Stellrings 3 im wesentlichen parallel zur Axialrichtung von Stellschraube 6 und Arretierbolzen 2' angeordnet. Das eine Ende des Arretierhebels 21 ragt so weit nach vorn, daß es etwa in einer Vertikalebene mit dem vorderen Ende der Stellschraube 6 liegt und leicht bedient werden kann. Am hinteren Ende des Arretierhebels 21 ist (bei 26) ein Ende eines Zwischenhebels 22 angelenkt, dessen anderes Ende an dem Arretierriegel 18 befestigt ist.

An einer Stelle zwischen den genannten beiden Enden des Arretierhebels 21 ist dieser mittels eines Gelenkstifts 23 an einem seitlichen Ansatz 24 des Stellrings 3 um eine vertikale Achse schwenkbar gelagert. Diese Lagerung ist so ausgebildet, daß die Schwenkbewegung des Arretierhebels 21 in eine Translationsbewegung des Zwischenhebels 22 in dessen Längsrichtung umgewandelt wird. Durch diese Translationsbewegung wird der Arretierriegel 18 zwischen seinen beiden Stellungen verschoben. Auf diese Weise kann der Arretierriegel 18 über den Arretierhebel 21 und den Zwischenhebel 22 aus der Arretierstellung (Fig. 17) in die Freigabestellung (Fig. 18) und umgekehrt verschoben werden.

An dem mit der Arretierriegel 18 verbundenen Ende des Zwischenhebels 22 befindet sich vorzugsweise ein Gewindeansatz, der in ein Gewindeloch an der einen Seitenfläche des Schenkels 18b des Arretierriegels eingeschraubt ist. Eine Kontermutter 25 sichert die Verbindung und erlaubt eine optimale Einstellung der Länge des Zwischenhebels 22.

Nachdem bei diesem Ausführungsbeispiel die Maschine in oben beschriebener Weise ausgerichtet wurde, wobei sich der Arretierriegel 18 jeweils in Freigabestellung befindet, muß das Richtelement arretiert werden. Dies geschieht indem man mit der Stellschraube 6 ein wenig nach links oder rechts dreht bis sich der Arretierriegel 18 mittels des Arretierhebels 21 leicht in die Arretierstellung, d.h., in Eingriff mit den Arretierbolzen, verschieben läßt. Nun dreht man die Stellschraube 6 nach links bis das Spiel (auf Zug) aufgehoben ist. Der Schiebeteller 4 ist nun fest verblockt und läßt sich nicht mehr bewegen.

## Patentansprüche

1. Richtelement zur Lagerung eines Maschinenfußes auf einem Boden, umfassend:
- eine Grundplatte (1),
- einen auf der Grundplatte (1) dieser gegenüber drehbar angeordneten Stellring (3),
- erste Arretiermittel, mit denen der Stellring (3) wahlweise in einen gegenüber der Grundplatte (1) drehfesten oder drehbaren Zustand versetzbar ist,
- einen innerhalb des Stellrings (3) auf der Grundplatte (1) angeordneten Schiebeteller (4), der mit dem Stellring (3) drehfest gekoppelt, jedoch auf der Grundplatte (1) radial relativ zum Stellring (3) verschiebbar ist und zur Aufnahme des Maschinenfußes dient,
- Verschiebemittel zum Verschieben des Schiebetellers (4) relativ zum Stellring (3), und
- zweite Arretiermittel zum Arretieren des Schiebetellers (4).

2. Richtelement nach Anspruch 1, bei dem die Grundplatte (1) einen senkrecht abstehenden zylindrischen Ansatz (1a) aufweist, dessen Außendurchmesser dem Innendurchmesser des Stellrings (3) entspricht und der in den Stellring (3) hineinragt, und bei dem die ersten Arretiermittel umfassen:
- eine in der Außenfläche des Ansatzes (1a) ausgebildete und sich in Umfangsrichtung um diese herum erstreckende Ringnut (1b),
- eine oder mehrere über die Umfangslänge des Stellrings (3) verteilte und diesen in Radialrichtung durchsetzende und auf die Ringnut (1b) ausgerichtete Gewindebohrungen (3a), und
- einen Gewindestift (9) in jeder der einen oder mehreren Gewindebohrungen (3a).

3. Richtelement nach Anspruch 1 oder 2, bei dem die Verschiebemittel eine Stellschraube (6) umfassen, die den Stellring (3) in Radialrichtung durchsetzt und an dem Schiebeteller (4) in Axialrichtung der Stellschraube (6) unverschiebbar verankert ist, und deren- Gewinde mit einem Gewinde (3b) in dem Stellring (3) in Eingriff bringbar ist und aus dem Eingriff lösbar ist derart, daß im Eingriffsfall eine Verdrehung der Stellschraube (6) zu einem Verschieben des Schiebetellers (4) relativ zum Stellring (3) führt, während andernfalls die Stellschraube (6) gegenüber dem Stellring (3) in dessen Radialrichtung frei beweglich ist.

4. Richtelement nach Anspruch 3, bei dem die Stellschraube (6) in eine Bohrung im Schiebeteller (4) hineinreicht, ein Gelenkbolzen (15) quer zu dieser Bohrung, diese durchsetzend und um seine Achse verschwenkbar, im Schiebeteller (4) angeordnet ist, und die Stellschraube (6) am Gelenkbolzen (15) um ihre Achse drehbar, aber axial unverschiebbar befestigt ist, wobei die Bohrung größer als der Außendurchmesser der Stellschraube (6) ist derart, daß sie ein begrenztes Verschwenken der Stellschraube um die Achse des Gelenkbolzens (15) erlaubt.

5. Richtelement nach einem der Ansprüche 1 bis 4, bei dem die zweiten Arretiermittel umfassen
- eine Arretierschraube (2), die in ein den Stellring (3) radial durchsetzendes Gewindeloch (3c) geschraubt ist und deren radial innen liegendes Ende in einem Sackloch (4b) des Schiebetellers (4) aufgenommen ist, und
- eine Kontermutter (12), die auf das radial außenliegende Ende der Arretierschraube (2) aufgeschraubt ist.

6. Richtelement nach Anspruch 5, bei dem die Arretierschraube (2) der Stellschraube (6) diametral gegenüberliegt.

7. Richtelement nach einem der Ansprüche 1 bis 4, bei dem die zweiten Arretiermittel umfassen:
- einen der Stellschraube (6) diametral gegenüberliegenden Arretierbolzen (2'), der verschiebbar in einem den Stellring (3) radial durchsetzenden Loch (3c') geführt ist und dessen radial innen liegendes Ende an dem Schiebeteller (4) verankert ist,
- einen Arretierriegel (18), der an der der Stellschraube (6) diametral gegenüberliegenden Außenfläche des Stellrings (3) zwischen einer Arretierungsstellung und einer Freigabestellung verschiebbar angeordnet ist, und in seiner Arretierstellung mit dem radial außenliegende Ende des Arretierbolzens (2') so im Eingriff steht, daß eine Verschiebung des Arretierbolzens (2') in dessen Axialrichtung verhindert wird, während dieser Eingriff in der Freigabestellung gelöst und eine Verschiebung ermöglicht ist, und
- eine Hebelanordnung (21, 22 23, 24) zur Verschiebung des Arretierriegels mit einem Arretierhebel, dessen Betätigungsende sich auf derselben Seite des Stellrings wie die Stellschraube (6) befindet.

8. Richtelement nach Anspruch 7, bei dem
- der Arretierriegel (18) im Schnitt im wesentlichen L-förmig ausgebildet ist und mit einem ersten Schenkel (18a) auf der von der Grundplatte (1) abgewandten Stirnfläche des Stellrings (3) aufliegt, während der zweite Schenkel (18b) an der äußeren Umfangsfläche (3g) des Stellrings (3) anliegt,
- in jedem der Schenkel (18a, 18b) wenigstens eine Führungsöffnung (18d) ausgebildet ist, in die ein in dem Stellring verankertes Führungselement (19, 20) eingreift, und
- der zweite Schenkel (18b) einen von dem Arretierbolzen (2') durchsetzten Ausschnitt (18c) aufweist derart, daß eine Verschiebung des Arretierriegels (18) zwischen dessen Arretierungsstellung und Freigabestellung zu einer Verschiebung des Arretierbolzens (2') in dem Ausschnitt (18c) im Stellring (3) führt.

9. Richtelement nach einem der vorhergehenden Ansprüche, bei dem
- der Stellring (3) einen ihn radial durchsetzenden Ausschnitt (3e; 3e') aufweist, mit einem kreisbogenförmigen ersten Abschnitt, in dem ein Halbgewinde (3b) ausgebildet ist, und einem sich an den offenen Teil des ersten Abschnitts anschließenden zweiten Abschnitt, dessen lichte Weite größer als der Außendurchmesser des Stellschraubengewindes ist, und
- an dem Stellring ein Riegel (5; 5') montiert ist, der in Umfangsrichtung zwischen einer ersten und einer zweiten Stellung derart verschiebbar ist, daß er in seiner ersten Stellung die Stellschraube (6) in Eingriff mit dem Halbgewinde (3b) hält, während er in seiner zweiten Stellung die Stellschraube (6) aus dem Eingriff mit dem Halbgewinde (3b) löst.

10. Richtelement nach Anspruch 9, bei dem
- der Riegel (5; 5') im Schnitt im wesentlichen L-förmig ausgebildet ist und mit einem ersten Schenkel (5a) auf der von der Grundplatte (1) abgewandten Stirnfläche des Stellrings (3) aufliegt, während der zweite Schenkel (5b) an der äußeren Umfangsfläche (3d) des Stellrings (3) anliegt,
- in jedem der Schenkel (5a, 5b) wenigstens eine Führungsöffnung (5d) ausgebildet ist, in die ein in dem Stellring verankertes Führungselement (7,10) eingreift, und
- der zweite Schenkel (5b) ein von der Stellschraube (6) durchsetztes Führungsloch (5c; 5c') aufweist derart, daß eine Verschiebung des Riegels (5) zwischen dessen erster und zweiter Stellung zu einer Verschiebung der Stellschraube (6) vom ersten zum zweiten Abschnitt des Ausschnitts (3e; 3e') im Stellring (3) führt.

11. Richtelement nach Anspruch 10, bei dem der erste und der zweite Abschnitt des Ausschnitts (3e; 3e') im Stellring (3) auf einer Linie liegen, die sich im wesentliche parallel zur Grundplatte erstreckt, und das Führungsloch (5c) eine Bohrung ist, deren Durchmesser dem Durchmesser der Stellschraube (6) entspricht.

12. Richtelement nach Anspruch 10, bei dem
- der Ausschnitt (3e') sich im Stellring (3) im wesentlichen in Axialrichtung erstreckt, und
- der zweite Schenkel (5b') einen von der Stellschraube (6) durchsetzten Ausschnitt (5c') aufweist, dessen Breite dem Durchmesser der Stellschraube (6) entspricht und dessen Mittellinie mit derjenigen des Ausschnitts (3e) im Stellring (3) einen Winkel bildet derart, daß eine Verschiebung des Riegels (5') zwischen dessen erster und zweiter Stellung zu einem Verschwenken der Stellschraube (6) um eine zur Grundplatte (1) parallele Achse führt.

13. Richtelement nach einem der Ansprüche 8 bis 12, bei dem in einem von beiden Teilen, dem Riegel (5; 5') und dem Stellring (3), ein in Richtung auf das andere Teil elastisch vorgespanntes Rastelement (11; 11') vorgesehen ist, und das andere der beiden Teile zwei dem Rastelement (11; 11') zugeordnete Mulden (3f; 5e) aufweist, in die das Rastelement (11; 11') in der ersten bzw. der zweiten Stellung des Riegels (5; 5') einrastet.
